# EUROPEAN PATENT SPECIFICATION

(11) **EP 3 102 768 B1**
(45) Date of publication and mention of the grant of the patent: **05.06.2019**
(21) Application number: 15705391.9
(22) Date of filing: 09.02.2015
(51) Int. Cl.: E06B 9/36, E06B 9/386, E06B 9/322, E06B 9/24

(54) **SOLAR TRACKING SYSTEM AND METHOD THEREFOR**
SONNENVERFOLGUNGSSYSTEM UND VERFAHREN DAFÜR
SYSTÈME DE POURSUITE DU SOLEIL ET SON PROCÉDÉ

(30) Priority: 07.02.2014 NL 2012229; 05.08.2014 NL 2013304
(43) Date of publication of application: 14.12.2016
(73) Proprietor: Kindow B.V., 2629 JD Delft (NL)
(72) Inventor: KIN, Sam, 1058 KZ Amsterdam (NL); TEN KATE, Sander, 1074 CP Amsterdam (NL)
(74) Representative: van der Velden, Marc
(86) International application number: PCT/NL2015/050084
(87) International publication number: WO 2015/119503

(56) References cited:
- EP-A1- 0 677 997
- DE-A1- 2 800 968
- FR-A1- 2 981 681

## Description

The invention relates to a solar tracking system for orienting slats and a method therefor.

It is a known problem that it can become very warm in buildings when the windows in the outer walls are exposed to sunlight. In order to keep the temperature in a comfortable range energy-requiring air-conditioning systems are employed which then cool the space inside the building.

In order to prevent undesired heating windows are often provided with sun protection. It is known in the case of large (office) buildings to give such sun protection an automatic form; when there is a great deal of sunlight the sun protection is then closed, usually by lowering solar protection elements.

The drawback of conventional sun protection is that blocking the direct sunlight also results in it becoming dark, and this is often undesired. On a day with variable light conditions it can moreover already become dark quickly when the sun goes in for a while, in which case an open position of the sun protection is preferred. In such variable light conditions an automatic system will for this reason switch automatically several times a day between a closed and an open position of the sun protection.

An object of the present invention is to provide a system wherein said drawbacks do not occur, or at least do so to lesser extent.

Said object is achieved according to the invention with the device for orienting slats relative to the sun, comprising the features of claim 1.

The control means calculate the position of the sun and ensure via control of the drive means that the slats are rotated such that the slats remain oriented substantially perpendicularly of the sun.

It is acknowledged here that the prior art relating to the present invention includes the publication DE-2800968 and EP0677997B1.

According to the invention the housing comprises two housing parts, and the device comprises a first housing part in which the drive means are arranged, a second housing part in which at least the control means arc arranged, and wherein the second housing part is connectable to one of at least two sides of the first housing part. Because the housing can be assembled from two housing parts, wherein the second housing part is connectable to two sides of the first housing part, the orienting device can be easily adapted to and modified between two mirrored embodiments. That is, a first embodiment wherein the housing is situated on the right-hand side of the guide and the slats, and a second embodiment wherein the housing is situated on the left-hand side of the guide and the slats.

When the first housing part in which the drive means are arranged is arranged substantially in line with the elongate guide in which the slats are engageable and guidable, the drive means can engage in simple manner on this guide.

According to a further preferred embodiment, the rotational position determining means comprise optical or magnetic sensors. Optical sensors have the advantage that they enable contactless measurement, thereby preventing the slats being undesirably adjusted as a result of a mechanical load. Magnetic sensors such as Hall sensors are easy to combine even with small and light magnets such as permanent magnets in order to be able to determine in highly reliable manner an actual momentary angular position of the slats relative to the guide on the basis of detected field strength and/or field line orientation of the magnetic field from the magnet or magnets. An angular position of the slats relative to the guide and therefore also, when prior knowledge is available about a position of the guide relative to for instance a more absolute orientation such as a north-south orientation, relative to a position of the sun can thus be determined in highly reliable manner as a momentary actual position. When this is compared to a desired position, which can be based solely on an actual position of the sun on a day in the year, or more broadly a season, modification, adjustment or rotation of the slats is possible from an actual position to a desired position.

According to yet another preferred embodiment, the optical sensors are arranged in a recess which takes a form running from the first housing part to the second housing part. This recess can protect the optical sensors and allows an extra volume of the housing.

According to yet another preferred embodiment, the recess arranged in the second housing part takes a mirrored form. The second housing part is hereby connectable to at least two sides of the first housing part, and a recess running from the first housing part to the second housing part is in this way obtained in both coupled situations.

According to yet another preferred embodiment, the slats are received in the guide for displacement in longitudinal direction, and the device further comprises translational position determining means for determining the translational position of the slats. Because the slats are displaceable in longitudinal direction of the guide, they can slide closed and open. Because the slats must be drawn sufficiently far open in order to be able to rotate, means are also provided with which the distance between adjacent slats can be (indirectly) determined.

A determination is preferably made as to whether the slats have been drawn fully open by providing detection means at the outer end of the guide. According to yet another preferred embodiment, the translational position determining means for determining the translational position of the slats comprise a switch arranged on or close to an outer end of the guide remote from the housing. When a slat makes contact with the switch, it sends a corresponding signal to the control means which are thereby informed that the slats are in a drawn open position which allows a substantially free rotation around their longitudinal axis.

According to yet another preferred embodiment, a magnetic connection which holds the slats in a fully drawn open position is provided on or close to the outer end of the guide remote from the housing. The slats are held fully drawn open by the magnetic connection and will not easily displace if an external force is accidentally exerted thereon. The magnetic connection thus provides a threshold value which prevents unintended displacement of the slats. The skilled person will appreciate that such a magnetic connection can be provided by at least providing a magnet on or close to the outer end of the guide and/or directly or indirectly on the outermost slat and by respectively providing the other co-acting part with a second magnet or giving it a metal form.

Although it is possible to envisage the longitudinal direction of the slats extending in a substantially lying plane and for instance being arranged substantially parallel to a (transparent) roof, according to a preferred embodiment the longitudinal direction of the slats extends in a substantially standing plane. It hereby becomes possible to apply the solar tracking system for sun protection of windows in upright walls.

When the longitudinal direction of the slats extends in a substantially standing plane, the slats are preferably suspended from the guide. Owing to gravitational force hanging slats will automatically be oriented vertically.

In a particularly advantageous embodiment the slats comprise sun protection slats which are substantially transparent and which are provided with one or more optical elements. The optical elements are configured to reflect direct sunlight, while diffuse daylight can pass through almost completely. On a sunny day about 80% of the daylight consists of direct sunlight. Because the greater part of this direct sunlight is reflected, the associated heat is also reflected. These properties ensure that the slats, when applied as indoor sun protection, reflect the heat outward but meanwhile allow entry of daylight.

According to a further preferred embodiment, the optical elements comprise one or more prisms. A prismatic surface structure is preferably arranged on a side of a slat. Tests have shown that, because of the prisms, such a prismatic surface structure can reflect up to 96% of direct sunlight while a greater part of the diffuse daylight is allowed through. These exceptionally favourable results do depend however on the position of the slats relative to the incident sunlight: the slats have to be oriented substantially perpendicularly of the solar rays. The control means which control the drive means with which the slats are drivable rotatably about their longitudinal axis relative to the guide are configured to rotate the slats about their longitudinal axis during the course of the day such that the slats remain oriented substantially perpendicularly of the incident sunlight. The control means avoid manual adjustment being necessary: in the case of slats with prisms this would require, for optimum performance, the slats being manually adjusted every few minutes, and this is evidently not realistic. It is desirable that the slats remain accurately oriented to within half a degree perpendicularly of the sun.

According to yet another preferred embodiment, the slats comprise one or more solar cells. By providing one or more slats wholly or partially with solar cells - for instance on only a narrow edge on the upper side - solar energy can be used for the energy supply to the orienting device of the solar tracking system. A battery is preferably provided in which generated solar energy is stored, thereby guaranteeing that sufficient energy is always available for control of the orienting device.

The invention further relates to a method for orienting the slats with an orienting device as described above, comprising the calibration steps of:
- rotating the slats in a first rotation direction with the drive means until they are detected by a sensor, wherein the rotational position at which this detection occurs is stored in the control means as a first end rotational position;
- rotating the slats in a second rotation direction opposite to the first rotation direction with the drive means until they are detected by a sensor, wherein the rotational position at which this detection occurs is stored in the control means as a second end rotation position; and
- wherein the control means determines the rotational displacement between the first end rotational position and the second end rotational position.

According to a preferred embodiment of the method, the control means determine the rotational displacement on the basis of the number of steps taken by an electric motor of the drive means between the first end rotational position and the second end rotational position.

According to a further preferred embodiment of the method, the slat rotated between the first end rotational position and the second end rotational position is connected to a disc which has openings arranged in peripheral direction and at which an optical sensor is directed. The rotational displacement can be measured very precisely with this arrangement.

According to a further preferred embodiment, the rotational displacement of at least one slat is measured with one or more magnetic sensors. Magnetic sensors provide the advantage that a contactless and reliable position determination is possible over the whole rotation movement of a slat.

The suspension of at least one slat and/or at least one slat itself is preferably provided with a magnet, and a magnetic sensor is arranged in the vicinity in order to detect the orientation of the magnet, and so of the slat with this magnet thereon.

It is particularly advantageous for at least one slat to be arranged under or close to a housing in which a magnetic sensor is received. The magnetic sensor is contactless and can be provided wholly out of sight in the housing.

The magnet of the slat is arranged very precisely in the measuring range of the magnetic sensor by providing the housing with a recess through which the slat provided with the magnet is rotatable.

According to yet another preferred embodiment, the magnetic sensors are configured to measure the electromagnetic field strength. It is hereby possible with the magnetic sensors to determine the absolute position of the slats in all positions.

According to yet another preferred embodiment of the method, the method further comprises the steps of:
- entering into the control means the time, the geographical position and the geographical orientation of the guide of the orienting device;
- the control means calculating the position of the sun relative to the guide; and
- the control means controlling the drive means such that the slats are rotated such that the slats remain oriented substantially perpendicularly of the sun.

According to the invention the control means calculate passively where the sun is located at a determined geographical position at a determined point in time relative to the orienting device. 'Passively' is understood to mean that an active real-time measurement of the sun is unnecessary. The advantage of applying passive control means is that the orienting device can control the slats at all times and is not dependent on the sun being visible for this purpose. Weather conditions such as cloud in front of the sun are in this way prevented from affecting the operation of the orienting device.

Preferred embodiments of the present invention are further elucidated in the following description with reference to the drawing, in which:
Figure 1 is a perspective view of a window having behind it a solar tracking system according to the invention;
Figure 2 is an enlarged perspective bottom view of the solar tracking system shown in figure 1 as seen from the rear;
Figure 3A is a detailed bottom view of the housing of the solar tracking system shown in figures 1 and 2;
Figure 3B is a detailed bottom view of the housing in an alternative, mirrored assembly;
Figure 4 is a schematic representation of the sun protection action of a slat provided with optical elements;
Figures 5A and 5B show two states of the translational position determining means according to an embodiment of the solar tracking system;
Figure 6 is a perspective view of rotational position determining means according to a further embodiment;
Figure 7 is a perspective view of a window having behind it a solar tracking system according to a second embodiment of the invention;
Figure 8 is an enlarged perspective bottom view of the solar tracking system shown in figure 7 as seen from the rear;
Figure 9 is a detailed bottom view of the housing of the solar tracking system shown in figures 7 and 8; and
Figure 10 is a perspective view of the mounting of a slat according to the embodiment shown in figures 7-9.

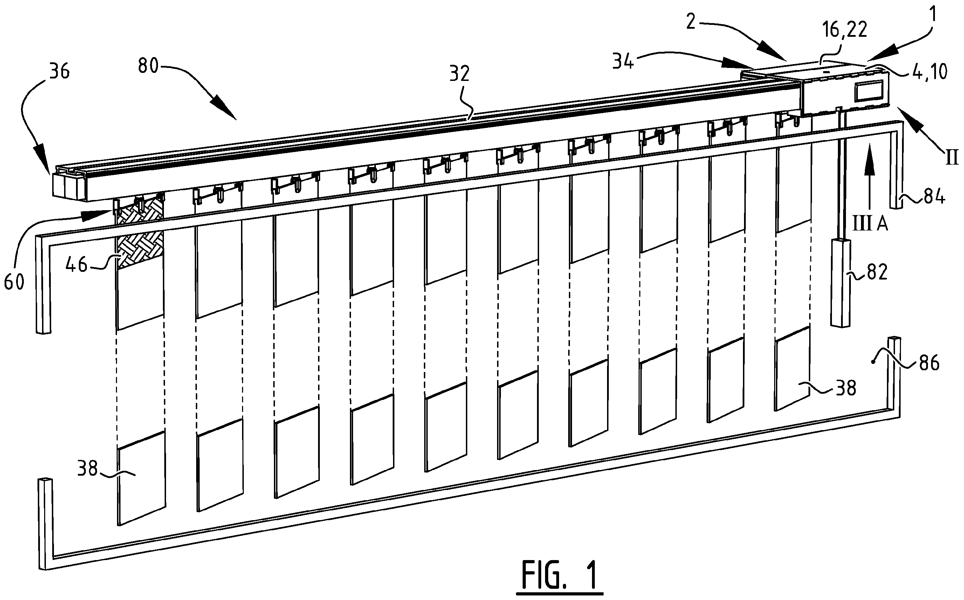

Arranged behind the window frame 84 with transparent window 86 shown in figure 1 is a solar tracking system 80 with an orienting device according to the invention. Slats 38 are slidable in longitudinal direction in guide 32 with a cord control 82 or optional remote control, whereby slats 38 can slide open or closed. One or more slats 38 can optionally be wholly or partially provided with solar cells 46 for generating electrical energy.

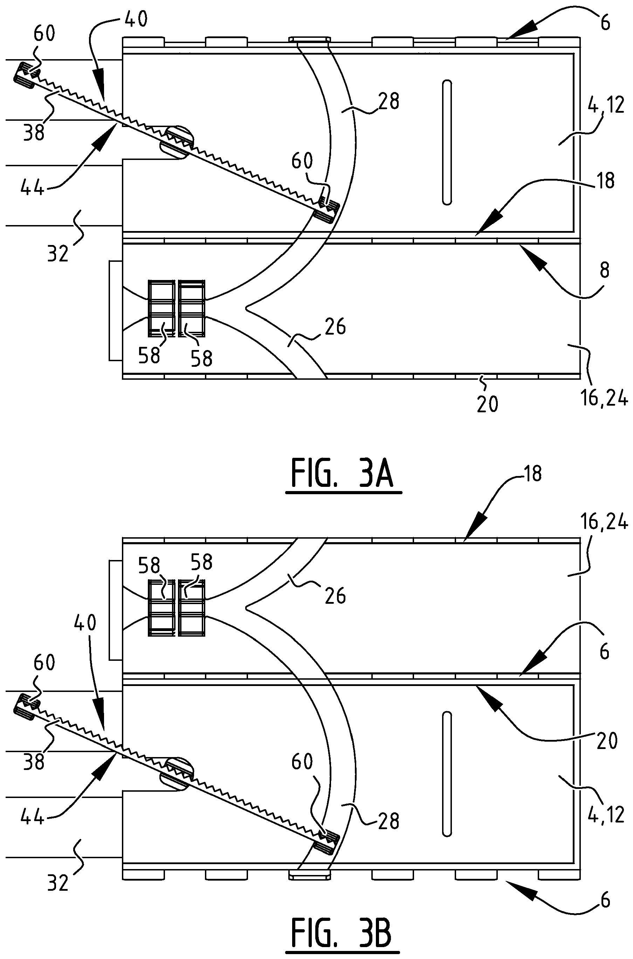

The orienting device comprises a housing 2 which in a particularly advantageous embodiment is assembled from a first housing part 4 and a second housing part 16, as will be further elucidated with reference to figures 3A and 3B.

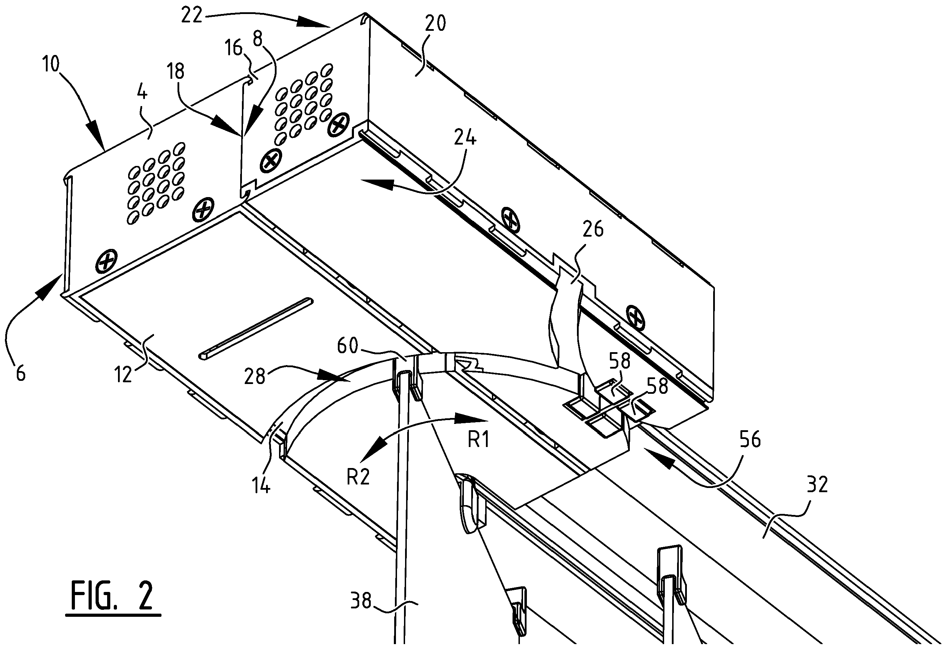

Housing 2 is shown in the enlarged perspective bottom view of figure 2. First housing part 4 has a first longitudinal side 6, a second longitudinal side 8, an upper side 10 and an underside 12. Second housing part 16 has a first longitudinal side 18, a second longitudinal side 20, an upper side 22 and an underside 24.

A recess 14 is arranged in the underside 12 of first housing part 4 and the underside 24 of second housing part 16 is also provided with a recess 26. In assembled state of first housing part 4 and second housing part 16 these recesses 14 and 26 form a continuous channel 28 through which a detection protrusion 12 arranged on a slat 38 is movable and can be detected by optical sensors 58 forming rotational position determining means.

Although it is possible to envisage the optical sensors 58 being arranged on the underside 24 of second housing part 16, the embodiment with a continuous channel provides the advantage that optical sensors 58 are protected and the volume of first housing part 4 and second housing part 16 can be relatively large for the purpose of accommodating therein components such as drive means 50 and control means 52.

It is possible to envisage as alternative an embodiment (not shown) in which an optical sensor is oriented downward from the underside 24 of second housing part 16 or the underside 12 of first housing part 4 and detects when slat 38 rotates past.

In the calibration process the slat 38 is rotated in a first rotation direction R1 until slat 38 is detected by an optical sensor 58, wherein this detected rotational position is stored as a first end rotational position in control means 52. Slat 38 is subsequently rotated by drive means 50 in a second rotation direction R2 opposite to the first rotation direction R1 until slat 38 is detected by a sensor 58. This rotational position at which detection once again occurs is stored as a second end rotational position in control means 52. Because control means 52 has recorded the rotational displacement between the first end rotational position and the second end rotational position, for instance by recording the number of steps taken by an electric motor of drive means 50 between the first end rotational position and the second end rotational position, control means 52 know the exact rotational position of slat 38.

Because it is advantageous to be able to decide on site whether housing 2 has to be arranged on the left or right-hand side of window frame 84, it is desirable that housing 2 allows a left-hand and a right-hand mounting. Housing 2 of orienting device 1 is divided for this purpose into two housing parts, wherein first housing part 4 and second housing part 16 are connectable to each other with at least two sides. The bottom view shown in figure 3A shows that second housing part 16 is coupled with its first longitudinal side 18 to second longitudinal side 8 of first housing part 4.

In the mirrored arrangement shown in figure 3B the second housing part 16 is coupled with its second longitudinal side 20 to first longitudinal side 6 of first housing part 4.

In the shown embodiment the second housing part 16 is provided with mirrored recesses 26 so that a continuous channel 28 is obtained in both configurations, i.e. in the situations shown in figure 3A and in figure 3B.

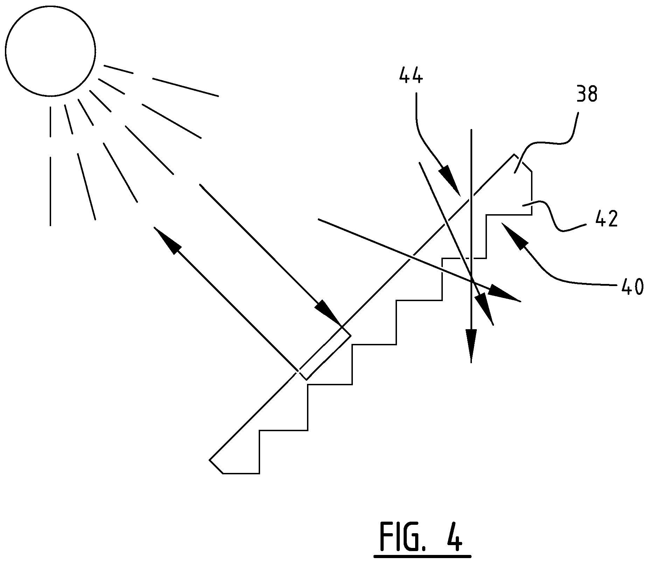

Shown in the schematic view of figure 4 is a slat 38 which is provided with a prismatic structure 42 on a first side 40 and which takes a flat form on second side 44. When solar rays impinge on optical elements 42 at a correct angle, the prismatic surface structure 42 will be able to reflect up to 96% of the direct sunlight, while the greater part of the diffuse daylight is allowed through. Because these exceptionally favourable results are greatly dependent on a correct perpendicular alignment of slats 38 relative to the incident sunlight, slats 38 are at all times held oriented substantially perpendicularly relative to the sun with the orienting device of solar tracking system 80.

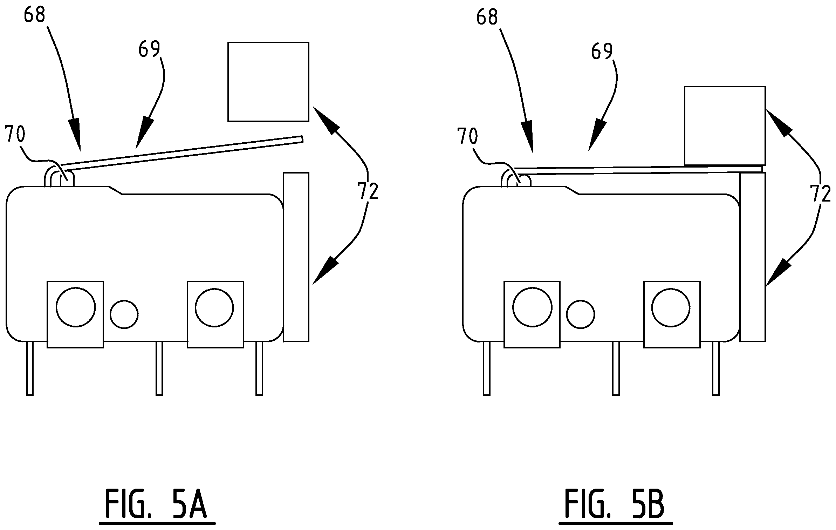

Because slats 38 can only rotate freely when they are situated in the fully drawn open position shown in figure 1, the orienting device of solar tracking system 80 is provided with translational position determining means 68, an embodiment of which is shown in figures 5A and 5B.

The translational position determining means 68 comprise a switch 70 which is pressed in by means of a lever 69 when slats 38 are situated in the drawn open position.

A magnetic connection 72 is preferably provided which holds the slats fixedly in this drawn open position and prevents them being accidentally displaced.

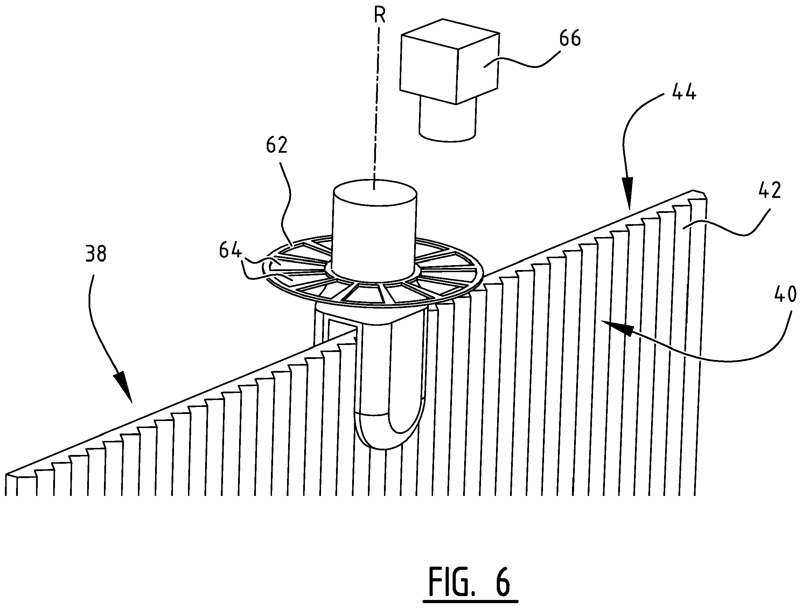

Figure 6 shows an alternative embodiment of rotational position determining means 56, wherein a slat 38 is provided around its rotation axis with a detection disc 62 in which openings 64 are arranged. The rotational position of slats 38 can be determined very precisely by having the number of openings and intermediate connections counted by an optical sensor 66. Calibration can once again take place by moving the slats reciprocally between a first end rotational position and a second end rotational position so that determination of an initial position is possible.

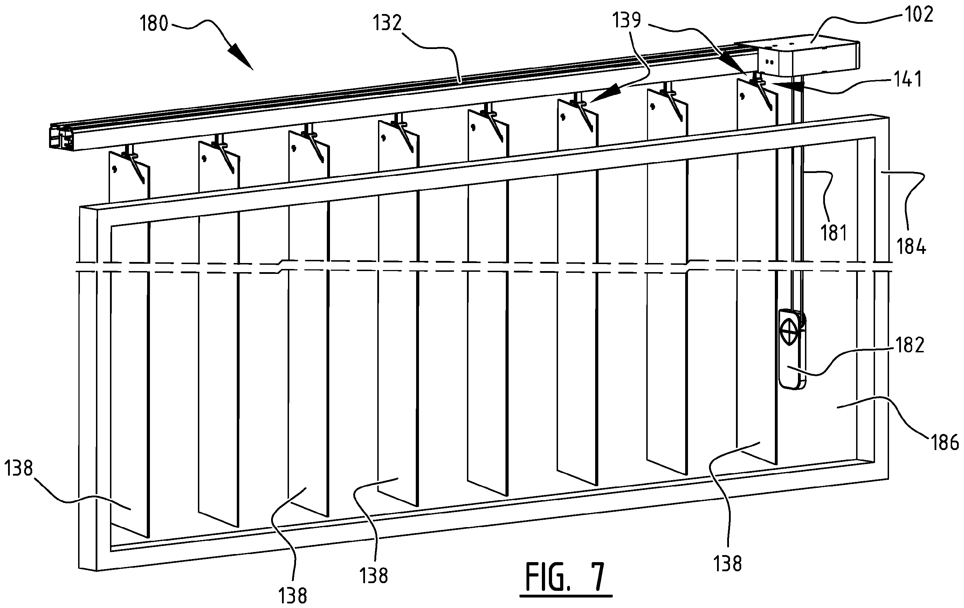

A further embodiment of the invention wherein the rotational displacement of a slat is measured with a magnetic sensor is shown in figures 7-10. Magnetic sensors provide the advantage that a contactless and reliable position determination is possible over the whole rotational movement of a slat.

Arranged behind the window frame 184 with transparent window 186 shown in figure 7 is a solar tracking system 180 with an orienting device according to the invention. Using a cord 181 and a control 182 the slats 138 are slidable in longitudinal direction in guide 132, whereby slats 138 can be slid closed and open. One or more slats 138 can once again optionally be wholly or partially provided with solar cells (not shown) for generating electrical energy.

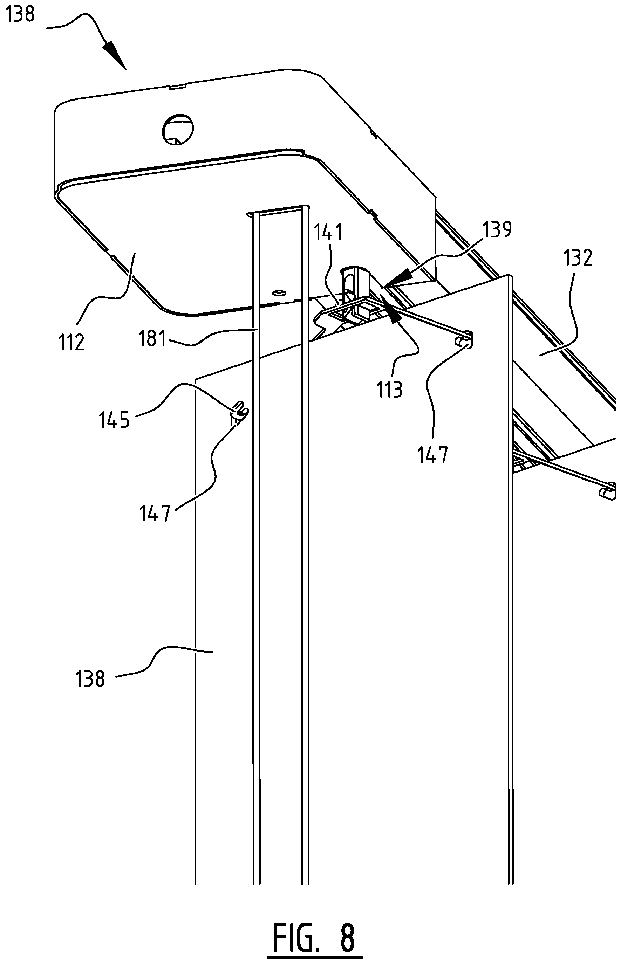

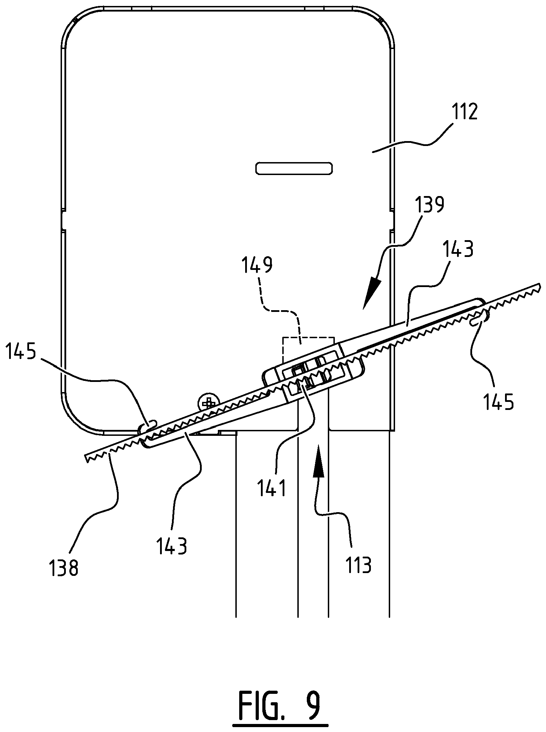

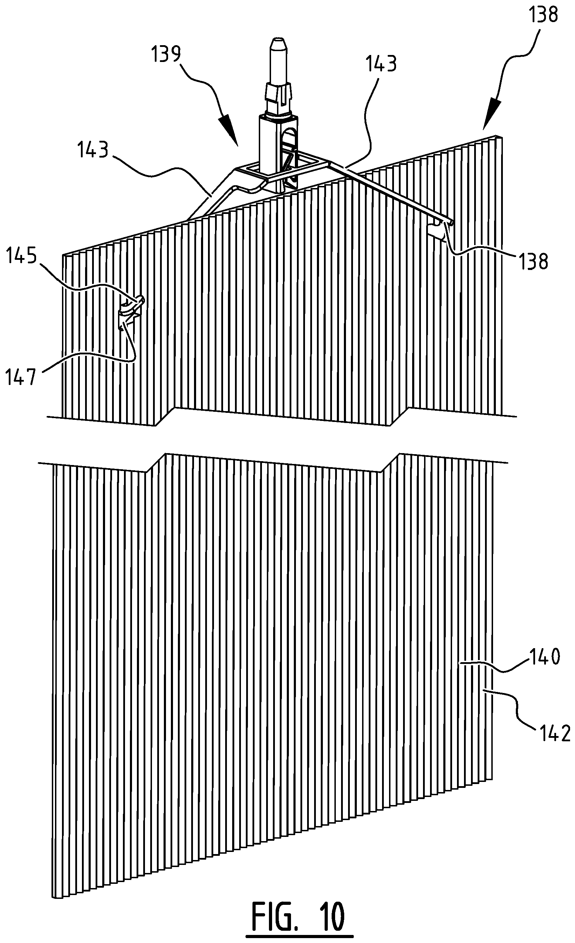

The orienting device comprises a housing 102 shown in perspective bottom view in figure 8 and in bottom view in figure 9. Provided in the underside 112 is a recess 113 in which the first slat 138 is received for rotation via a carrier member 139. Such a carrier member 139 is shown in more detail in figures 9 and 10 and comprises two carrier arms 143 provided on the outer ends with hook parts 145 which engage in recesses 147 arranged for this purpose in slats 138.

Carrier member 139 of first slat 138, i.e. the slat situated under housing 2, is provided with a magnet 141, in particular a permanent magnet, although other random types of magnet are by no means precluded.

Provided in housing 2 is a magnetic sensor which determines the position of magnet 141, and thereby the orientation of the slat 138 connected thereto. A possible example of such a magnetic sensor is a so-called Hall sensor. In the bottom view shown in figure 9 the position of the magnetic sensor received in the housing (and therefore not visible) is indicated schematically with the broken line block 149. Because all slats 138 are coupled to each other in respect of orientation and movement, a determination of the orientation of just one slat 138 suffices to determine and adjust the orientation such that the first sides 140 with the prismatic structure 142 arc oriented substantially transversely of solar rays from the sun.

In another embodiment two magnets 141 are arranged on either side relative to a longitudinal axis of slat 138.

Magnetic sensor 149 is configured to detect magnetic fields generated by magnet 141 or magnets 141, in particular parameters thereof such as field line orientation and/or field strength, or both, or other parameters. On the basis of such detection results from magnetic sensor 149 a control can determine the actual momentary angular position of slat 138 at least relative to an orientation of the guide, or even for instance relative to a more absolute north-south orientation than the angular position relative to an orientation of elongate guide 132. This is possible using an algorithm, not further detailed, for determining the momentary angular position of slat 138, wherein the parameter is for instance that of field line orientation and the Hall sensor and the control are together configured to determine the orientation on the basis of field lines of the at least one magnet 141 determined by magnetic sensor 149.

The momentary position of slat 138 can be compared to a position thereof desired at that moment. The desired position can be based on sunlight detection, for instance with a sun sensor on for instance a slat 138, for instance by progressing through a calibration rotation of at least the associated slat 138, optionally at intervals, with the sun sensor and determining the position of the sun at this angular position of the sun sensor where the intensity is highest. Additionally or alternatively the momentarily desired position of the slats can be determined on the basis of prior knowledge of the position of the sun in a determined season or a specific day of the year and an orientation of guide 132.

A detected angular position of slat 138 can then - if necessary - be adjusted or adapted by a drive connected to the control for the purpose of adjusting the angular position of slats in order to rotate the slats 138 to an angular position thereof corresponding to the determined, measured, calculated or otherwise ascertained desired angular position of slats 138 in accordance with the actual position of the sun at that moment.

Provision is particularly though not exclusively made for an end position detection or at least a translational position determination. Thus made possible is that a limit can be set for an angular displacement of the slats when these are not or not wholly and not all distributed along guide 132. If a number of the slats lie close together, they cannot be rotated wholly in line with guide 132 without risk of damage because adjacent slats may then come up against each other's suspensions. A fraction of slats which are however already distributed along guide 132 can be determined relative to the overall number of slats. The control can be configured to distribute all slats along guide of 132 or, when determining the angular position of the slats desired at any moment, to take account of this fraction by limiting the angular displacement of the distributed slats and the compact cluster of the other slats to an overall angular position at which there is the least possible risk of damage.

It is noted that the configuration of the magnetic sensor on or at the guide and the at least one magnet on or at at least one of the slats can be reversed, with the sensor on the slat and the magnet on the guide. One of the sensor and the magnet can also be arranged on an element in the vicinity such as a window frame or wall in order to enable performing of the measurement of the momentary angular position of the slat.

The orientation of first slat 138 is determined for practical reasons in the shown embodiment because it can be located under housing 102. It will however be apparent to the skilled person that the determination of the orientation according to the invention can likewise be applied at another slat 138. It is noted for the sake of completeness that in the view of figure 10 one of the other slats is shown which is not provided with a magnet.

Although they show preferred embodiments of the invention, the above described embodiments are intended only to illustrate the present invention and not in any way to limit the specification of the invention. When measures in the claims are followed by reference numerals, such reference numerals serve only to contribute toward understanding of the claims, but are in no way limitative of the scope of protection. It is particularly noted that the skilled person can combine technical measures of the different embodiments. The rights described are defined by the following claims, within the scope of which many modifications can be envisaged.

## Claims

1. Solar tracking system (80; 180) for orienting slats (38; 138) relative to the sun, comprising at least two slats (38) and a device for orienting slats relative to the sun, comprising:
- an elongated housing (2; 102);
- an elongated guide (32; 132) connected to the housing and having engaging elements (139) which engage the slats and are displaceable in the longitudinal direction of the elongated housing, wherein the slats are rotatable about a longitudinal axis thereof;
- drive means (50) which act on the rotatable slats and with which the slats, which extend substantially transversely of the elongated guide, are rotatable about the longitudinal axis thereof; and
- rotational position determining means (56) configured to determine the actual rotational position of the slats relative to the housing,
wherein the slats are received in the guide for displacement in the longitudinal direction of the elongated housing and freely rotatable about their longitudinal axis when the slats are in a fully drawn open position,
in that the device further comprises translational position determining means (68) for determining the translational position of the slats along the elongated guide, and in that the device comprises control means (52) to control the drive means in dependence of a desired rotational position of the slats relative to the sun, the actual rotational position of the slats relative to the housing, and the translational position of the slats along the elongated guide.

2. Solar tracking system as claimed in claim 1 , wherein the rotational position determining means comprise sensors, in particular magnetic and/or optical sensors (66).

3. Solar tracking system as claimed in claim 2, wherein the rotational position determining means comprise a magnetic sensor (149) and at least one magnet (141) for arranging on at least one of the slats.

4. Solar tracking system as claimed in at least one of the foregoing claims, wherein the housing comprises two housing parts, wherein the drive means are arranged in a first housing part (4), wherein at least the control means are arranged in a second housing part (16), and wherein the second housing part is selectively connectable to one of at least two sides of the first housing part, wherein preferably sensors are arranged in a recess (26) extending from the first housing part to the second housing part in accordance with a rotation path of a slat, and wherein preferably the recess (14) arranged in the second housing part is mirrored.

5. Solar tracking system as claimed in any of the foregoing claims, wherein the translational position determining means for determining the translational position of the slats comprise an end position switch (70) arranged on or close to an outer end of the guide remote from the housing.

6. Solar tracking system as claimed in claim 5, wherein a magnetic connection which holds the slats in a fully drawn open position is provided on or close to the outer end of the guide remote from the housing.

7. Solar tracking system as claimed in any of the foregoing claims, wherein the longitudinal direction of the slats extends in a substantially standing plane.

8. Solar tracking system as claimed in any of the foregoing claims , wherein the slats are suspended from the guide.

9. Solar tracking system as claimed in any of the claims 1-8, wherein the slats comprise sun protection slats which are substantially transparent and which are provided with one or more optical elements (42).

10. Solar tracking system as claimed in claim 9, wherein the optical elements comprise one or more prisms.

11. Solar tracking system as claimed in claim 9 or 10, wherein the slats comprise one or more solar cells (46).

12. Method for orienting the slats in a solar tracking system as claimed in any of the claims 1-9, comprising the steps of:
- determining an actual rotational position of the slats using the rotational position determining means;
- determining a desired rotational position of the slats;
- rotating the slats in a first rotation direction with the drive means to the desired rotational position; and/or
- rotating the slats in a second rotation direction opposite to the first rotation direction with the drive means to the desired rotational position; and
- wherein the control means determines the rotational displacement between the actual rotational position and the desired rotational position.

13. Method as claimed in claim 12, further comprising measuring the actual rotational position of at least one slat with at least one magnetic sensor on or at the guide and at least one magnet on or at at least one of the slats, or with at least one magnetic sensor on or at at least one of the slats and at least one magnet on or at the guide.

14. Method as claimed in claim 13, further comprising measuring at least one parameter from the group comprising the electromagnetic field strength and the field line orientation of the magnet using the at least one magnetic sensor.

15. Method as claimed in any of the claims 12-14, further comprising the steps of:
- entering into the control means or retrieving from a memory an actual time, geographical position and geographical orientation of the guide of the orienting device;
- the control means calculating the position of the sun relative to the guide;
- calculating the desired angular position of the slats; and
- the control means controlling the drive means on the basis of the foregoing data such that the slats are rotated such that the slats remain oriented substantially at right angles to the sun.

## Patentansprüche

1. Sonnennachlaufsystem (80; 180) zur Ausrichtung der Lamellen (38; 138) relativ zur Sonne, umfassend mindestens zwei Lamellen und eine Vorrichtung zum Orientieren von Lamellen relativ zur Sonne, umfassend:
- ein längliches Gehäuse (2; 102);
- eine langgestreckte Führung (32; 132) die mit dem Gehäuse verbunden ist und Eingriffselemente (139) aufweist, die in die Lamellen eingreifen und in Längsrichtung des länglichen Gehäuses verschiebbar sind, wobei die Lamellen um eine Längsachse davon drehbar sind;
- Antriebsmittel (50) die auf die drehbaren Lamellen wirken und mit denen die Lamellen, die sich im Wesentlichen quer zu der länglichen Führung erstrecken, um ihre Längsachse drehbar sind; und
- Drehpositionsbestimmungsmittel (56) die konfiguriert sind, um die tatsächliche Drehposition der Lamellen relativ zu dem Gehäuse zu bestimmen,
wobei die Lamellen in der Führung zur Verschiebung in Längsrichtung des länglichen Gehäuses aufgenommen sind und um ihre Längsachse frei drehbar sind, wen sich die Lamellen in einer vollständig geöffneten Position befinden, wobei die Vorrichtung ferner ein Translationspositionsbestimmungsmittel (68) zum Bestimmen der Translationsposition der Lamellen entlang der länglichen Führung aufweist,
und wobei die Vorrichtung eine Steuereinrichtung (52) zum Steuern der Antriebsmittel in Abhängigkeit einer gewünschten Drehposition der Lamellen relativ zur Sonne, der tatsächlichen Rotationsposition der Lamellen relativ zum Gehäuse und der Translationsposition der Lamellen entlang der Länglichen Führung aufweist.

2. Sonnennachlaufsystem nach Anspruch 1, wobei die Drehpositionsbestimmungsmittel Sensoren, insbesondere magnetische und/oder optische Sensoren (66) umfassen.

3. Sonnennachlaufsystem nach Anspruch 2, wobei die Drehpositionsbestimmungsmittel einen Magnetsensor (149) und mindestens einen Magneten (141) zum Anordnen an mindestens einer der Lamellen umfassen.

4. Sonnennachlaufsystem nach mindestens einem der vorhergehenden Ansprüche, wobei das Gehäuse zwei Gehäuseteile umfasst, wobei die Antriebsmittel in einem ersten Gehäuseteil (4) angeordnet ist, wobei zumindest die Steuermittel in einem zweiten Gehäuseteil (16) angeordnet ist, und wobei das zweite Gehäuseteil wahlweise mit einer von mindestens zwei Seiten des ersten Gehäuseteils verbindbar ist, wobei vorzugsweise Sensoren in einer Ausnehmung (26) angeordnet sind, die sich vom ersten Gehäuseteil zum zweiten Gehäuseteil gemäß einem Drehweg einer Lamellen erstreckt, und wobei vorzugsweise die in dem zweiten Gehäuseteil angeordnete Ausnehmung (14) verspiegelt ist.

5. Sonnennachlaufsystem nach einem der vorhergehenden Ansprüche, wobei die Translationspositionsbestimmungsmittel zum Bestimmen der Translationsposition der Lamellen einen Endpositionsschalter (70) aufweist, der an oder nahe einem äußeren Ende der Führung angeordnet ist, die vom Gehäuse entfernt ist.

6. Sonnennachlaufsystem nach Anspruch 5, wobei eine magnetische Verbindung, die die Lamellen in einer vollständig gezeichneten offenen Position hält, an oder nahe am äußeren Ende der Führung vorgesehen ist, die vom Gehäuse entfernt ist.

7. Sonnennachlaufsystem nach einem der vorhergehenden Ansprüche, wobei sich die Längsrichtung der Lamellen in einer im Wesentlichen stehenden Ebene erstreckt.

8. Sonnennachlaufsystem nach einem der vorhergehenden Ansprüche, wobei die Lamellen an der Führung aufgehängt sind.

9. Sonnennachlaufsystem nach einem der Ansprüche 1 bis 8, wobei die Lamellen Sonnenschutzlamellen umfassen, die im Wesentlichen transparent sind und mit einem oder mehreren optischen Elementen (42) versehen sind.

10. Sonnennachlaufsystem nach Anspruch 9, wobei die optischen Elemente ein oder mehrere Prismen umfassen.

11. Sonnennachlaufsystem nach Anspruch 9 oder 10, wobei die Lamellen eine oder mehrere Solarzellen (46) umfassen.

12. Verfahren zum Ausrichten der Lamellen in einem Sonnennachlaufsystem nach einem der Ansprüche 1 bis 9, umfassend die Schritte:
- Bestimmen einer tatsächlichen Drehposition der Lamellen unter Verwendung der Drehpositionsbestimmungsmittel;
- Bestimmen einer gewünschten Drehposition der Lamellen;
- Drehen der Lamellen in einer ersten Drehrichtung mit der Antriebsmittel in die gewünschte Drehposition; und/oder
- Drehen der Lamellen in einer zweiten Drehrichtung entgegen der ersten Drehrichtung mit der Antriebsmittel in die gewünschten Drehposition; und
- wobei die Steuereinrichtung die Drehverschiebung zwischen der tatsächlichen Drehposition und der gewünschten Drehposition bestimmt.

13. Verfahren nach Anspruch 12, ferner umfassend das Messen der tatsächlichen Drehposition von mindestens einer Lamelle mit mindestens einem Magnetsensor an oder an der Führung und mindestens einem Magnet an oder an mindestens einer der Lamellen oder mit einer mindestens ein Magnetsensor an oder an mindestens einer der Lamellen und mindestens ein Magnet an oder an der Führung.

14. Verfahren nach Anspruch 13, ferner umfassend das Messen von mindestens einem Parameter aus der Gruppe, die die elektromagnetische Feldstärke und Fieldlinienorientierung des Magneten umfasst, unter Verwendung des mindestens einen Magnetsensors.

15. Verfahren nach einem der Ansprüche 12 bis 14, weiterhin umfassend die Schritte:
- Eingabe oder Abrufen aus einem Speicher der tatsächlichen Zeit, der geographischen Position und der geographischen Orientierung der Führung der Orientierungsvorrichtung;
- Die Steuereinrichtung berechnet die Position der Sonne relativ zur Führung;
- Berechnung der gewünschten Winkelposition der Lamellen; und
- Die Steuereinrichtung steuert die Antriebsmittel auf der Grundlage der vorstehenden Daten derart, dass die Lamellen derart gedreht werden, dass die Lamellen im Wesentlichen rechtwinklig zur Sonne ausgerichtet bleiben.

## Revendications

1. Système (80; 180) de suivi solaire pour l'orientation des lattes (38; 138) par rapport au soleil, comprenant au moins deux lattes et un dispositif d'orientation des lattes par rapport au soleil, comprenant:
- un boîtier (2; 102) allongé;
- un guide (32; 132) allongé relié au boîtier et comportant des éléments (139) mise en prise qui s'engagent dans les lattes et peuvent être déplacés dans la direction longitudinale du boîtier allongé, les lattes pouvant tourner autour de leur axe longitudinal;
- des moyens d'entraînement (50) qui agissent sur les lattes rotatives et avec lesquels les lattes, qui s'étendent sensiblement transversalement par rapport au guide allongé, peuvent tourner autour de leur axe longitudinal; et
- des moyens de détermination de la position de rotation (56) configurés pour déterminer la position de rotation réelle des lattes par rapport au boîtier,
dans lequel les lattes sont reçues dans le guide pout être déplacées dans la direction longitudinale du boîtier allongé et peuvent tourner librement autour de leur axe longitudinal lorsque les lattes sont dans une position complètement ouverte,
dans lequel le dispositif comprend en outre un moyen de détermination de la position de translation (68) pour déterminer la position de translation des lattes le long du guide allongé,
et dans lequel le dispositif comprend un moyen de commande (52) pour commander le moyen d'entraînement en fonction d'une position de rotation souhaitée des lattes par rapport au soleil, de la position de rotation réelle des lattes par rapport au boîtier et de la position de translation des lattes le long du guide allongé.

2. Système de suivi solaire selon la revendication 1, dans lequel les moyens de détermination de la position de rotation comprennent des capteurs, en particulier des capteurs (66) magnétiques et/ou optiques.

3. Système de suivi solaire selon la revendication 2, dans lequel les moyens de détermination de la position de rotation comprennent un capteur magnétique (149) et au moins un aimant (141) pour disposer au moins une des lattes.

4. Système pour suivi solaire selon au moins l'une des revendications précédentes, dans lequel le boîtier comprend deux parties de boîtier, dans lequel les moyens d'entraînement sont agencés dans une première partie de boîtier (4), dans lequel au moins les moyens de commande sont agencés dans une seconde partie de boîtier (16), et dans lequel la seconde partie de boîtier peut être connectée de manière sélective à l'un au moins des deux côtés de la première partie de boîtier, les capteurs étant de préférence disposés dans un évidement (26) s'étendant de la première partie de boîtier à la seconde partie de boîtier conformément à un trajet de rotation d'une latte, dans lequel, de préférence, l'évidement (14) disposé dans la second partie de boîtier est réfléchi.

5. Système de suivi solaire selon l'une quelconque des revendications précédentes, dans lequel le moyen de détermination de la position de translation pour déterminer la position de translation des lattes comprend un commutateur (70) de position finale disposé sur ou à proximité d'une extrémité extérieure du guide éloignée du boîtier.

6. Système de suivi solaire selon la revendication 5, dans lequel une connexion magnétique qui maintient les lattes dans une position complètement ouverte est prévue sur ou à proximité de l'extrémité extérieure du guide éloignée du boîtier.

7. Système de suivi solaire selon l'une quelconque des revendications précédentes, dans lequel la direction longitudinale des lattes s'étend dans un plan sensiblement immobile.

8. Système de suivi solaire selon l'une quelconque des revendications précédentes, dans lequel les lattes sont suspendues au guide.

9. Système de suivi solaire selon l'une quelconque des revendications 1 à 8, dans lequel les lattes comprennent des lattes de protection solaire qui sont sensiblement transparentes et qui sont pourvues d'un ou plusieurs éléments optiques (42).

10. Système de suivi solaire selon la revendication 9, dans lequel les éléments optiques comprennent un ou plusieurs prismes.

11. Système de suivi solaire selon la revendication 9 ou 10, dans lequel les lattes comprennent une ou plusieurs cellules solaires (46).

12. Procédé pour orienter les lattes dans un système de suivi solaire selon l'une quelconque des revendications 1 à 9, comprenant les étapes consistant à:
- déterminer une position de rotation réelle des lattes en utilisant le moyen de détermination de position de rotation;
- déterminer une position de rotation souhaitée des lattes;
- faire tourner les lattes dans un premier sens de rotation avec les moyens d'entraînement dans la position de rotation souhaitée; et/ou
- faire tourner les lattes dans un deuxième sens de rotation opposé au premier sens de rotation avec les moyens d'entraînement dans la position de rotation souhaitée ; et
- dans lequel le moyen de commande détermine le déplacement en rotation entre la position de rotation réelle et la position de rotation souhaitée.

13. Procédé selon la revendication 12, comprenant en outre la mesure de la position de rotation réelle d'au moins une latte avec au moins un capteur magnétique sur ou au niveau du guide et au moins un aimant sur ou au moins une des lattes, ou avec au moins un capteur magnétique sur ou au moins une des lattes et au moins un aimant sur ou au niveau du guide.

14. Procédé selon la revendication 13, comprenant en outre la mesure d'au moins un paramètre du groupe comprenant l'intensité du champ électromagnétique et l'orientation de la ligne de champ de l'aimant en utilisant le au moins un capteur magnétique.

15. Procédé selon l'une quelconque des revendications 12 à 14, comprenant en outre les étapes consistant à:
- entrer dans les moyens de commande ou extraire d'une mémoire l'heure, la position géographique et l'orientation géographique réelles du guide du dispositif d'orientation;
- les moyens de commande calculant la position du soleil par rapport au guide;
- calculer la position angulaire souhaitée des lattes; et
- les moyens de commande commandant les moyens d'entraînement sur la base des données précédentes de telle sorte que les lattes tournent de telle sorte que les lattes restent orientées sensiblement perpendiculairement au soleil.
